# EUROPEAN PATENT APPLICATION

(11) **EP 4 782 269 A1**
(43) Date of publication of application: **29.07.2026**
(21) Application number: 25221309.5
(22) Date of filing: 05.12.2025
(51) Int. Cl.: B60N 2/015, B60N 2/24, B60N 2/68, B61D 33/00

(54) **MODULAR SEAT ASSEMBLY FOR A PASSENGER VEHICLE, AND PASSENGER VEHICLE COMPRISING SUCH MODULAR SEAT ASSEMBLY**

(30) Priority: 28.11.2024 IN 202411093209
(71) Applicant: ALSTOM Holdings, 93400 Saint-Ouen-sur-Seine (FR)
(72) Inventor: ARORA, Rahul, 13359 Berlin (DE); BAVANDI, Ismael, 59200 Tourcoing (FR); KADAM, Gaurav Ialasaheb, 422012 Nashik, Maharashtra (IN); HENNEQUIN, Valentin, 59410 Anzin (FR); PESCIA, Gerald, 78120 Sonchamp (FR); PREVOST, Baptiste, 38920 Crolles (FR)
(74) Representative: Plasseraud IP

(57) **Abstract**

Modular seat assembly for realizing one or more seats (100) of a passenger vehicle (200) and comprising at least:

- a mount assembly (1) which is suitable to be fixed to a side wall (202) of the vehicle;

- at least one supporting component (10) which comprises:

• a first portion (11) suitable to be connected to at least a part of the one mount assembly (1);
• a second portion (12) which protrudes transversely from the first portion (11) and comprises a plurality of arms (13A, 13B, 13C, 13D, 13E) which are spaced apart from each other and are provided each with at least one associated first fixing bracket (14);
• a third portion (15) which protrudes upwardly from the second portion (12) and is provided with at least one second fixing bracket (17);

- one or more profiles (20, 30) configured to be connected to the at least one supporting component (10) thereby forming at least one seat (100).

## Description

The present invention relates to a modular seat assembly for realizing one or more seats of a passenger vehicle, in particular transversal seats, and to a passenger vehicle comprising such a modular seat assembly.

The modular seat assembly according to the present invention is particularly suitable for being applied in metro coaches and will be described hereinafter by making reference to such application, without intending in any way to limit its possible use in any other suitable type of passenger vehicles, such as buses, trains, taxi vans, etc.

As known, in public transportation vehicles, such as in metro coaches, at present each seat is usually formed by a unique structure seat, i.e. an integral body forming both the seat pan and the seat backrest.

Then, one or a plurality of aligned body seats is/are transversely connected to a side wall of a coach by means of a cantilever frame which extends under the body of the seat(s) towards the interior of the vehicle and is fitted with a plurality of fixing means to the mounting side wall.

Although this solution allows having suitable seats transversely positioned onboard a passenger vehicle, it presents some aspects worth of further improvement.

For example, the presence of the cantilever frame below the seats occupies space that may limit movement of a seated passenger, and renders cleaning cumbersome.

Further, the fact that the body of the seats is integral forces to change the whole seat when needed.

In addition, the way the cantilever is connected to the seats and to the side wall, due to the interdependency of the various parts involved, renders mounting/dismounting operations rather difficult. Actually, if there is the need to remove a seat, it is usually necessary to dismount also at least part of the associated side wall.

Hence, the present invention is aimed at providing a solution capable of at least mitigating one or more of such issues.

Accordingly, the present invention provides a modular seat assembly for realizing one or more seats of a passenger vehicle, characterized in that it comprises at least:
- a mount assembly which is suitable to be fixed to a side wall of the vehicle;
- at least one supporting component which comprises:
   - a first portion suitable to be connected to at least a part of the one mount assembly;
   - a second portion which protrudes transversely from the first portion and comprises a plurality of arms which are spaced apart from each other and are provided each with at least one associated first fixing bracket;
   - a third portion which protrudes upwardly from the second portion and is provided with at least one second fixing bracket;
- one or more profiles configured to be connected to the at least one supporting component thereby forming at least one seat.

The above-mentioned aim of the present invention is also achieved by a passenger vehicle according to claim 11.

Preferred embodiments of the invention are specified in the dependent claims, the contents of which are to be understood as an integral part of this description.

Further characteristics and advantages will become apparent from the description of some preferred but not exclusive exemplary embodiments of a modular seat assembly for realizing one or more seats of a passenger vehicle according to the present invention, illustrated only by way of non-limitative examples with the accompanying drawings, wherein:

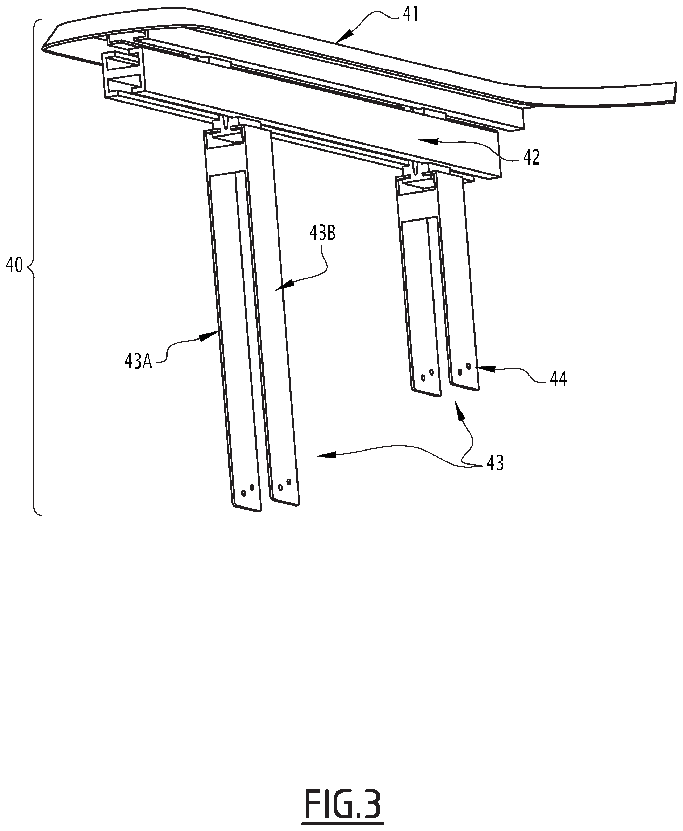

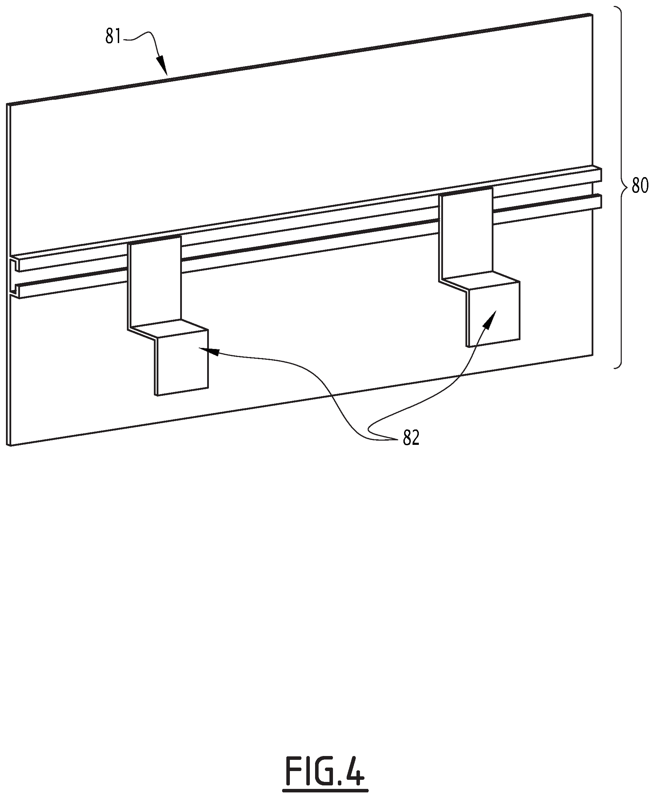

figures 1 to 4 are views schematically illustrating some exemplary embodiments of some components used in the modular seat assembly according to the invention;
figures 5 to 7 are views schematically illustrating various steps of assembling the various components of the modular seat assembly according to the invention;
figure 8 shows an exemplary sitting layout in a metro coach realized using the modular seat assembly according to the invention;
figures 9 and 10 shows two different examples of possible layouts which can be realized using the modular seat assembly according to the invention;

It should be noted that in the detailed description that follows, identical or similar components, either from a structural and/or functional point of view, may have the same or different reference numerals, regardless of whether they are shown in different embodiments of the present disclosure.

It should also be noted that in order to clearly and concisely describe the present disclosure, the drawings may not necessarily be to scale and certain features of the disclosure may be shown in somewhat schematic form.

Further, when the term "configured", or "adapted", or "shaped", or a similar term is used herein while referring to any component as a whole, or to any part of a component, or to a combination of components, it has to be understood that it means and encompasses correspondingly either the structure, and/or the configuration and/or the form and/or the positioning.

In addition, when the term "about" or "substantial" or "substantially" is used herein, it has to be understood as encompassing an actual variation of plus or minus 5% with respect to an indicated reference value, axis, time or position, and when the terms transversal or transversely are hereby used, they have to be understood as encompassing a direction non-parallel to the reference part(s) or direction(s)/axis they refer to, and perpendicularity has to be considered a specific case of transverse direction.

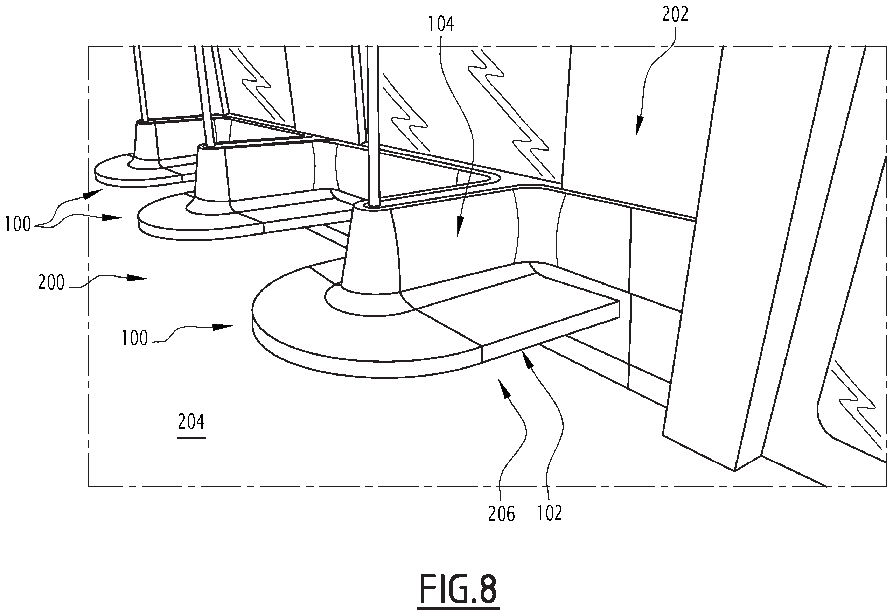

Figure 8 illustrates schematically the interior of a passenger vehicle 200, in particular a metro coach, with a sitting layout realized using a possible embodiment of a modular seat assembly according to the present invention.

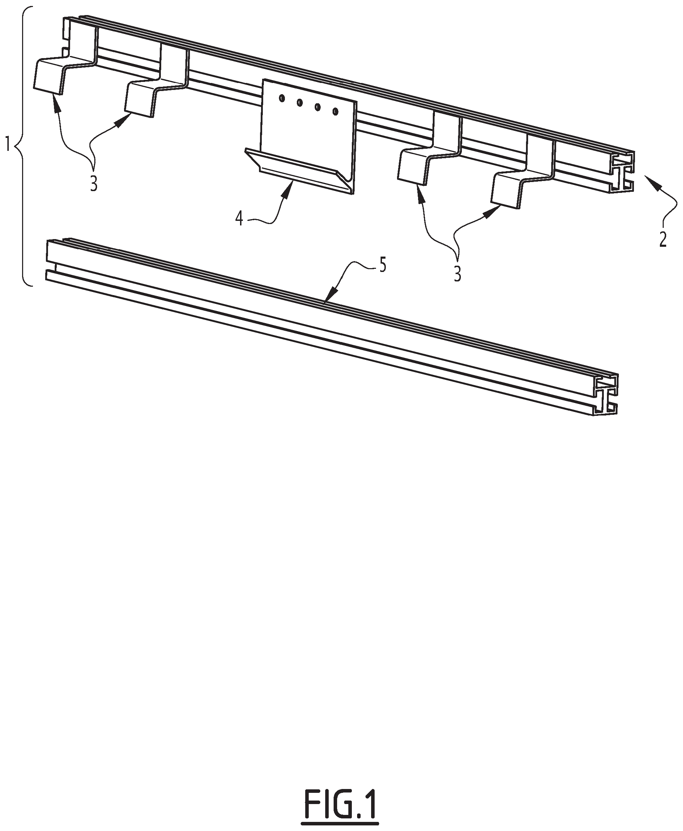

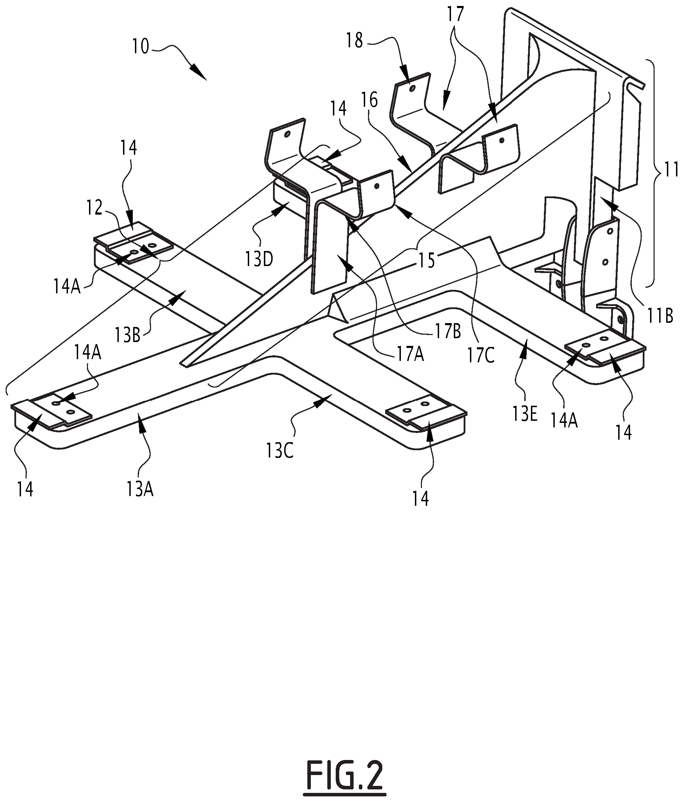

The modular seat assembly comprises at least:
- a mount assembly, schematically indicated in figure 1 by the overall number 1, which is suitable to be fixed to a side wall 202 of the vehicle 200;
- at least one supporting component, schematically represented in figure 2 by the overall reference number 10 which comprises:
   (a): a first portion, indicated by the overall reference number 11, which is suitable to be connected to at least a part of the mount assembly 1;
   (b): a second portion, indicated by the overall reference number 12, which protrudes transversely from the first portion 11, towards the inner side of the vehicle 200, and comprises a plurality of arms 13A, 13B, 13C, 13D, 13E which are spaced apart from each other and are provided each with at least one associated first fixing bracket 14;
   (c): a third portion, indicated by the overall reference number 15, which protrudes upwardly from the second portion 12 and is provided with at least one second fixing bracket 17.

Usefully, the modular seat assembly according to the invention further comprises one or more profiles configured to be connected to the at least one supporting component 10 thereby forming at least one seat 100.

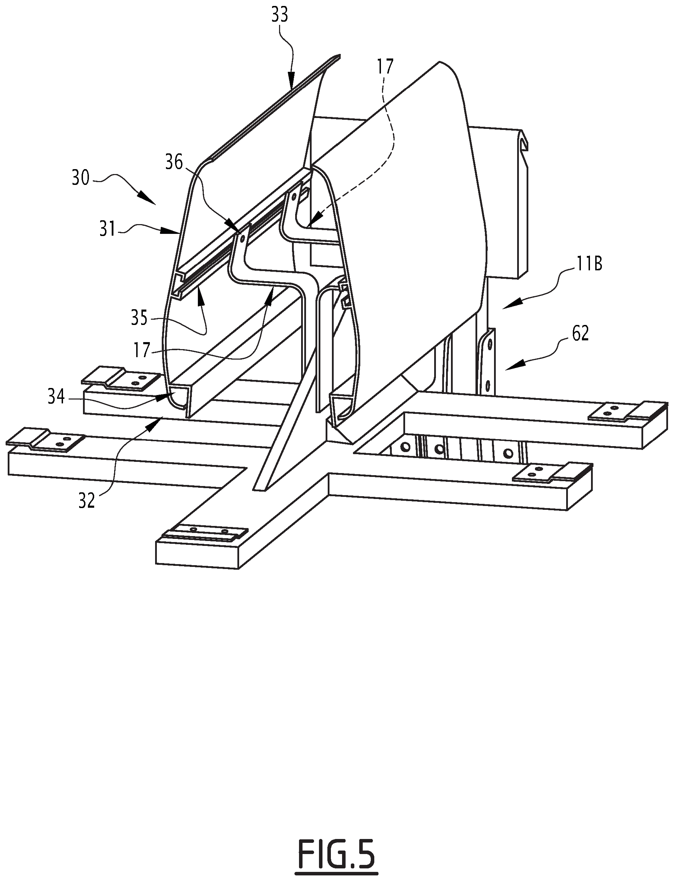

In particular, in one possible embodiment, the one or more profiles comprise:
- at least one first profile, illustrated in figures 5-7 and therein indicated by the overall reference number 20, which is configured to be connected to one or more of the first fixing brackets 14, thereby forming a seat pan of at least one seat, indicated in figure 8 by the respective reference numbers 102 and 100;
- at least one second profile, illustrated in figures 5-7 and therein indicated by the overall reference number 30, which is configured to be connected to the at least one second fixing bracket 17, thereby forming a seat backrest of the at least one seat 100, indicated in figure 8 by the reference number 104.

In one possible embodiment, the at least one supporting component 10 is configured so that, when its first portion 11 is connected to said at least a part of the one mount assembly 1, and this latter is fixed to the side wall 202, the at least one seat 100 is suspended on the side wall 202 with the seat pan 102 spaced apart from the floor 204 of the vehicle 200.

In this way, as visible in figure 8, a free space 206 is conveniently left between the seat pan 102 and the floor 204.

Thus, movements of legs of sitting passengers are not hindered, and cleaning of the vehicle 200 are made easier.

In one possible embodiment, as illustrated in figure 2, the first portion 11 of the at least one supporting component 10 comprises a hook-shaped portion 11A configured to be hooked onto an associated portion of the mount assembly 1.

According to one possible embodiment, the first portion 11 comprises also a pair of parallel arms 11A and 11B (see figures 2, 5 and 6).

Further, in one possible embodiment, the plurality of arms of the second portion 12 comprises a central arm 13A which protrudes transversely towards the inner side of the vehicle from the first portion 11, and at least a first lateral arm 13B which protrudes transversely from a first side of the central arm 13A, and a second lateral arm 13C which protrudes transversely from a second side of the central arm 13A opposite to the first side.

In particular, in the exemplary embodiment illustrated in figure 2, the plurality of arms of the second portion 12 comprises:
- two first lateral arms 13B and 13D which are spaced apart from each other along and protrude transversely from a first side of the central arm 13A; and
- two second laterals arm 13C and 13D which are spaced apart from each other along and protrude transversely from a second side of the central arm 13A opposite to the first side.

Each of the one or more first fixing brackets 14 is provided with one or more through holes 14A receiving fixing means, e.g. screws, which attach each first fixing to an end part of a respective arm 13A, 13B, 13C, 13D, 13E.

According to a possible embodiment, the third portion 15 of the supporting component 10 comprises a substantially flat gusset 16 which protrudes upwardly, e.g. substantially vertically, from the second portion 12 and transversely from the first portion 11, e.g. along the central arm 13B.

In particular, seen laterally, the flat gusset 16 has a triangular shape with the upper side inclined downwardly starting from the first portion 11.

According to this embodiment, the at least one second fixing bracket comprises a plurality of second fixing brackets 17 which protrudes protruding outwardly from the flat gusset 16 spaced apart from each other.

In particular, in the exemplary embodiment illustrated in figure 2 there are illustrated four second fixing brackets 17 which are provided along the flat gusset 16.

Two second fixing brackets 17 are positioned along and at one face of the gusset 16 spaced apart from each other, and the other two second fixing brackets 17 are positioned along and at the other face of the gusset 16 spaced apart from each other and facing each the corresponding second fixing bracket positioned at the other face.

In the exemplary embodiment illustrated, each second fixing bracket 17 comprises for example a shaped body having a first section 17A protruding upwardly from a face of the gusset 16, a second section 17B which protrudes transversely from the first section 17A away from the gusset 16, and a third section 17C which protrudes upwardly from the second section and is provided with one or more holes 18 for fixing the at least one second profile 30.
- at least a first bar 2 which is suitable to be fixed to the side wall 202 of the vehicle 200;
- a plurality of third fixing brackets 3 which are fixed along the first bar 2 spaced apart from each other; and
- a hook 4 which is fixed along the first shaped bar 2 and is adapted to be hooked onto an associated portion of the first portion 11 of the supporting component 10.

In particular, the hook 4 is devised to engage with the hook-shaped portion 11A of the first portion 11 of the supporting component 10.

For example, the first bar 2 has a longitudinal body configured to comprise, when seen in cross section, one or more rails suitable to allow coupling along it with various components of the vehicle 200, such as lining panels, fitting parts, and/or of the modular seat assembly itself.

In one possible embodiment, as illustrated in figure 1, the mount assembly 1 further comprises a second shaped bar 5 which is suitable to be fixed to the side wall 202 of the vehicle 200 below and spaced apart from the first bar 2.

For example, the second bar 2 has a shaped body similar or substantially equal to that of the first bar 2, and thus it also comprises a longitudinal body configured to comprise, when seen in cross section, one or more rails suitable to allow coupling along it with various components of the vehicle 200, such as lining panels, fitting parts, and/or of the modular seat assembly itself.

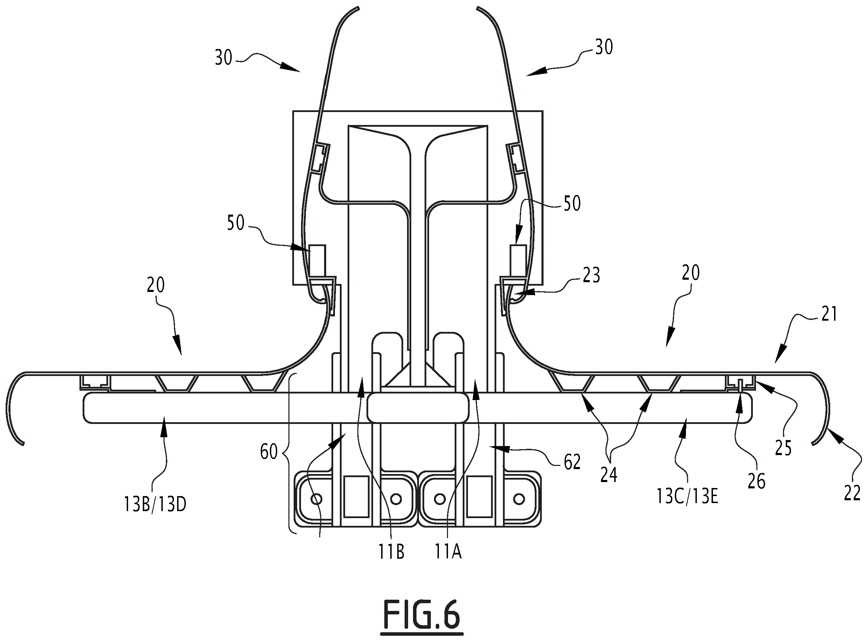

In one possible embodiment, as for example illustrated in figure 6, the at least one first profile 20 has a contoured body 21 which is shaped to form the desired shape of the seat pan 102 and which comprises a lower rim 22 and an upper rim 23.

Further, the at least one first profile 20 comprises one or more reinforcing parts 24 adapted to bear against the upper surface of one or more of the plurality of arms of the second portion 12, and one or more anchoring portions 25 configured to be attached to one or more corresponding first fixing brackets 14, for example via screws 26.

In the exemplary embodiment illustrated in the figures, the modular seat assembly according to the invention is used for realizing a two-seat layout, wherein the two seats 100 are positioned back-to-back and transversely, i.e. one facing the front of the coach and the other the back.

Hence, in the figures there are illustrated two first profiles 20, substantially identical to each other, which are positioned one on a right side of the supporting component 10 and the other on the left side (with reference to a front view as seen in figures 5 and 6).

For example, in the exemplary embodiment illustrated, the first profile 20 on the right side comprises an anchoring portion 25 which is attached, via the respectively associated first fixing brackets 14, to both the lateral arms 13C and 13E, and the other first profile 30 on the left side comprises an anchoring portion 25 which is attached, via the respectively associated first fixing brackets 14, to both the lateral arms 13B and 13D.

In one possible embodiment, as for example illustrated in figures 5 and 6, the at least one second profile 30 has a contoured body 31 which is shaped to form the desired shape of the seat backrest 104 and which comprises a lower rim 32 and an upper rim 33.

In particular, the lower rim 32 is configured to define a recess 34 adapted to receive and clip therein an upper rim 23 of the at least one first profile 20, as illustrated in figure 6.

Further, the at least one second profile 30 comprises one or more anchoring portions 35 configured to be attached to one or more corresponding second fixing brackets 17, for example via screws 36.

As above indicated, in the exemplary embodiment illustrated in the figures, there are illustrated two second profiles 30, substantially identical to each other, which are positioned one on a right side of the supporting component 10 and the other on the left side (with reference to a front view as seen in figures 5 and 6).

For example, in the exemplary embodiment illustrated, one second profile 30 on the right side comprises an anchoring portion 35 which is attached to both the second fixing brackets 17 positioned on the right side of the gusset 16, and the other second profile 30 on the left side comprises an anchoring portion 55 which is attached to both the second fixing brackets 17 positioned on the left side of the gusset 16.

Each second profile has its lower rim 32 with the recess 34 which receives and clips therein the upper rim 23 of the corresponding first profile 20, as illustrated in figure 6.

In one possible embodiment, the modular seat assembly according to the present invention comprises at least a third profile, illustrated in figure 2 by the overall reference number 40.

As illustrated in figure 2, the third profile 40 comprises:
- at least a cover 41 suitable to be positioned over the upper rim 33 of the at least one second profile 30 thereby forming a top part of a seat 100;
- a reinforcement bar 42 which is positioned under and runs along the cover 41; and
- one or more inner arms 43, wherein each inner arm 43 comprises a pair of substantially parallel walls 43A, 43B which protrude downwardly with respect to the cover 41 and are suitable to be connected to the third portion 15 of the at least one supporting component 10.

In particular, each wall 43A, 43B is provided with one or more holes 44 suitable to receive fixing means, e.g. screws, for fixing to the gusset 16.

In one possible embodiment, the cover 41 is configured to have a flat upper surface which may serve as a support for placing thereon any object/device of passengers.

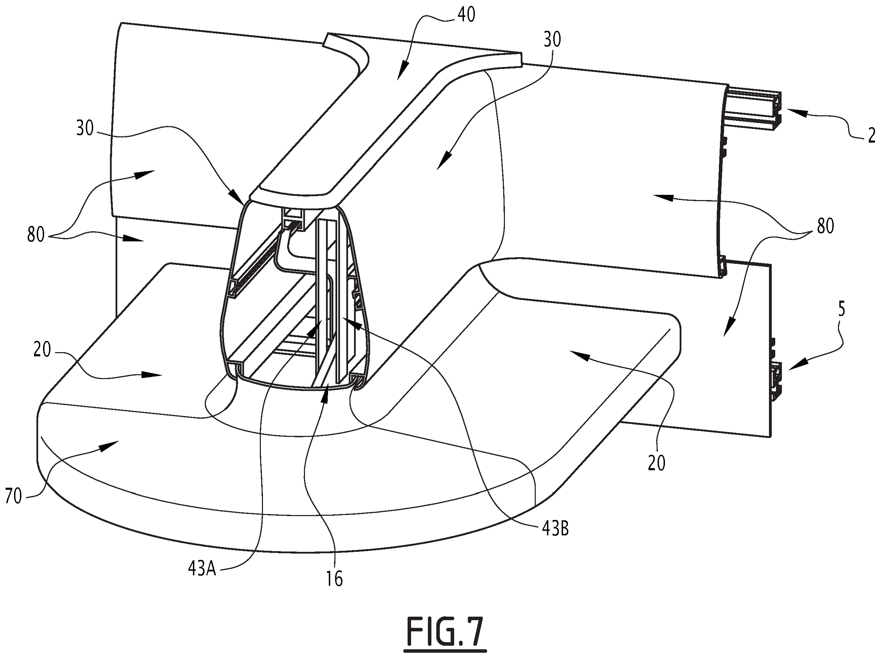

In the exemplary embodiment illustrated, during assembly, as for example shown in figure 7, the third profile 40 is positioned with its cover 41 bearing over the upper rim 33 of both the left and right second profiles 30, with the gusset 16 inserted between the side walls 43A and 43B of each inner arm 43. Then, each wall 43A, 43B is attached, e.g. screwed, to the gusset 16.

In one possible embodiment, the first profile 20, the second profile 30 and third profile 40 are connected to the at least one supporting component 10, and are configured and mutually positioned to define an inner space inside which at least a predominant part the at least one supporting component 10, i.e. more than 50% of its body, is accommodated.

In one possible embodiment, at least one of the first profile 20, the second profile 30, and the third profile 40 is provided with a lighting device which is configured to be positioned inside the seat 100 and to emit light towards the outside of the seat 100.

In particular, in the exemplary embodiment illustrated, a lighting device, schematically indicated only n figure 5 by the reference number 50, is coupled to or structurally integrated with the structure of the or each second profile 30 and is configured to diffuse light from the inner part of a seat backrest 104 towards the associated seat pan 102.

In this way, a pleasant and cozy atmosphere can be created.

Clearly, depending of the applications, the modular seat assembly according to the invention may comprise some more components or may be coupled to other components.

For instance, according to the exemplary embodiment illustrated in the attached figures, the modular seat assembly further comprises a lower mounting support, illustrated in figure 2, 5 and 6 and therein indicated by the reference number 60.

The lower mounting support 60 is suitable to be fixed, e.g. screwed, to the side wall 202 of the vehicle 200 and comprises a couple of housing seats 61 and 62 suitable to receive therein each a corresponding arm 11A and 11B of the first portion 11.

For instance, each arm 11A, 11B, once inserted in the respective housing seat 61 and 62, can be attached therewith, e.g. by screwing.

For example, when realizing the depicted two-seat back to back configuration, the assembly comprises a curved profile, illustrated in figure 7 with the reference number 70, which is configured to be connected as a separate additional module to the supporting component 10 and to the or each first profile 20.

For instance, the curved profile 60 may comprise at least one anchoring portion, similar to the one or more anchoring portions 25 or 35, for being attached to the central arm 13A, via the respective first fixing bracket 14 associated to such central arm 13A. Further, the curved profile can be configured to have its free side rims clipped with corresponding side rims of both first profiles 20.

Further, the front part of the assembly, shown open in figure 7, can be closed by a further profile, as illustrated in figure 8 where the front part of the two back-to-back seats 110 is shown closed.

Finally, the modular seat assembly can comprise one more additional lateral profiles, for instance in order to complete the seat area at the side wall 202.

An exemplary embodiment of such lateral profile is illustrated in figure 2 and therein indicated by the overall reference number 80.

For instance, the lateral profile 80 can comprise a contoured body 81 which is shaped to form the desired shape of the side part of each sitting area, and one or more rear brackets 82.

Depending on the part of the side wall where each lateral profile 80 has to be installed, and as illustrated in figure 7, the contoured body 81 can be substantially or predominantly flat, as shown for the two lateral profiles 80 positioned at a lower position of the side wall, or can be at least partially curved as shown for the two lateral profiles 80 positioned at an upper position.

The respective one or more brackets 82 can be used to attach each lateral profile 80, for example to the first bar 2, or to the second bar 5, or to any suitable fitting part of the side wall 202.

Hence, it has been demonstrated how the modular seat assembly according to the invention allows achieving the intended aim since it provides a modular seat structure, which is suspended, and in particular hooked, onto the side wall, to form a transversal seat module, thus easing cleaning and simplifying fittings of the various parts.

In particular, as previously described, the assembly comprises a plurality of individual modules which allow simplifying installation and maintenance, providing at the same time a great flexibility in applications.

For instance, since the profiles forming the seat backrests 104 and the seat pans 102 are structurally separate parts, this results in the possibility of offering multiple shapes, styling and functional comforts.

For example backrests can be different in shapes, offered with or without cushions, with or without integrated armrest, without impacting the associated seat pans.

Further, the profiles forming the backrests are repeating elements that can be easily joined together to form a two, four or five seater on sidewall depending upon the door pitch of each vehicle.

Likewise, seat pans 102 can be mounted with or without cushions and armrests depending on the specific needs. Each first profile 20 used for realizing a seat pan 102, can be realized as an extruded profile of any desired length depending of width of coach, seating capacity and layout requirements, and can be supplied in any coloured anodizing or painted finish.

In addition, the modular assembly according to the invention allows a very easy fitting in a "plug&play" configuration.

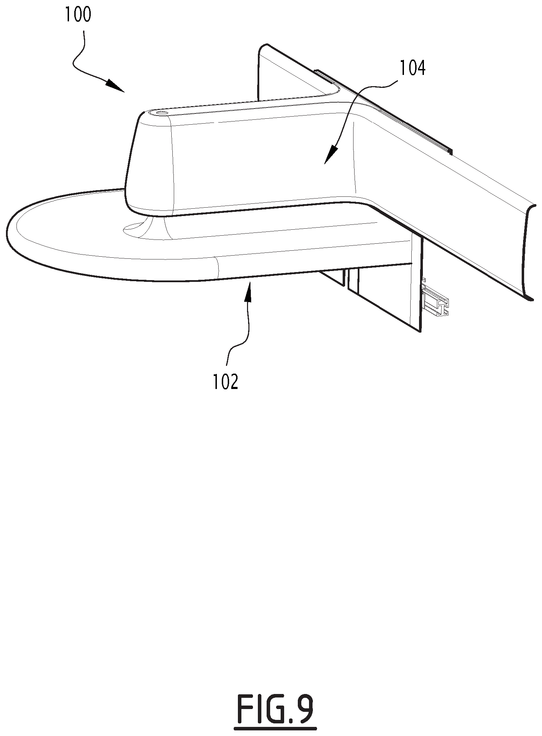

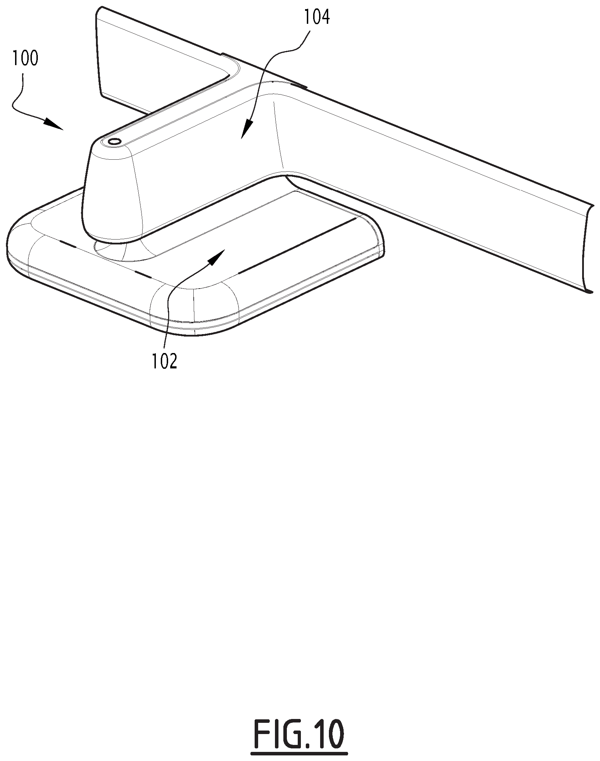

For instance, figures 9 and 10 schematically show two different examples of seats 100, wherein the same backrest 104 is used in both examples while the respective seat pans 102 have different shapes, thus easily changing the overall aspect of the seat layout by exploiting the modularity of the assembly.

The modular seat assembly thus conceived is susceptible of modifications and variations, all of which are within the scope of the inventive concept as defined in particular by the appended claims.

All the details may furthermore be replaced with technically equivalent elements.

## Claims

1. A modular seat assembly for realizing one or more seats (100) of a passenger vehicle (200), **characterized in that** it comprises at least:
- a mount assembly (1) which is suitable to be fixed to a side wall (202) of the vehicle;
- at least one supporting component (10) which comprises:
- a first portion (11) suitable to be connected to at least a part of the one mount assembly (1);
- a second portion (12) which protrudes transversely from the first portion (11) and comprises a plurality of arms (13A, 13B, 13C, 13D, 13E) which are spaced apart from each other and are provided each with at least one associated first fixing bracket (14);
- a third portion (15) which protrudes upwardly from the second portion (12) and is provided with at least one second fixing bracket (17);
- one or more profiles (20, 30) configured to be connected to the at least one supporting component (10) thereby forming at least one seat (100).

2. The modular seat assembly according to claim 1, wherein the one or more profiles (20, 30) comprise:
- at least one first profile (20) which is configured to be connected to one or more of said first fixing brackets (14) thereby forming a seat pan (102) of at least one seat (100);
- at least one second profile (30) which is configured to be connected to the at least one second fixing bracket (17) thereby forming a seat backrest (104) of said at least one seat (100).

3. The modular seat assembly according to any one of the preceding claims, wherein the at least one supporting component (10) is configured so that, when its first portion (11) is connected to said at least a part of the one mount assembly (1), said at least one seat (100) is suspended on said side wall (202) with the seat pan (102) spaced apart from the floor (204) of the vehicle (200) thereby leaving a free space (206) between said seat pan (102) and the floor (204).

4. The modular seat assembly according to any one of the preceding claims, wherein said first portion (11) of the at least one supporting component (10) comprises a hook-shaped portion (11A) configured to be hooked onto an associated portion of the mount assembly (1).

5. The modular seat assembly according to any one of the preceding claims, wherein said plurality of arms (13A, 13B, 13C, 13D, 13E) of the second portion (12) comprises a central arm (13A) which protrudes transversely from the first portion (11), and at least a first lateral arm (13B, 13C) which protrudes transversely from a first side of the central arm (13A), and a second lateral arm (13D, 13E) which protrudes transversely from a second side of the central arm (13A) opposite to the first side.

6. The modular seat assembly according to any one of the preceding claims, wherein said third portion (15) comprises a substantially flat gusset (16) which protrudes upwardly from the second portion (12) and transversely from the first portion (11), and wherein said at least one second fixing bracket (17) comprises a plurality of second fixing brackets protruding outwardly from the flat gusset (16) spaced apart from each other.

7. The modular seat assembly according to any one of the preceding claims, wherein the mount assembly (1) comprises at least a first bar (2) which is suitable to be fixed to said side wall (202) of the vehicle (200), a plurality of third fixing brackets (3) which are fixed along the first bar (2) spaced apart from each other, and a hook (4) which is fixed along the first bar (2) and is adapted to be hooked onto an associated portion of the first portion (11) of the supporting component (10).

8. The modular seat assembly according to claim 7, wherein the mount assembly (1) further comprises a second shaped bar (5) which is suitable to be fixed to said side wall (202) of the vehicle (200) spaced apart from the first bar (2).

9. The modular seat assembly according to any one of the preceding claims, wherein the at least one second profile (30) has a lower rim (32) which is configured to define a recess (34) adapted to receive and clip therein an upper rim (23) of the at least one first profile (20).

10. The modular seat assembly according to any one of the preceding claims, wherein it further comprises at least one third profile (40) which comprises at least a cover (41) suitable to be positioned over an upper rim (33) of the second profile (30) thereby forming a top part of the seat (100), a shaped bar (42) positioned under the cover (41), and one or more inner arms (43), each inner arm (43) comprising a pair of substantially parallel walls (43A, 43B) which protrude downwardly with respect to the cover (41) and are suitable to be connected to said third portion (15) of the at least one supporting component (10).

11. A passenger vehicle (200), **characterized in that** it comprises at least one modular seat assembly as defined in any one of the previous claims.
